# EUROPÄISCHE PATENTSCHRIFT

(11) **EP 2 647 532 B1**
(45) Veröffentlichungstag und Bekanntmachung des Hinweises auf die Patenterteilung: **13.05.2020**
(21) Anmeldenummer: 13161213.7
(22) Anmeldetag: 27.03.2013
(51) Int. Cl.: B60S 9/02, B60S 9/08

(54) **Wagenhebersystem und Wagenheberbedienelement**
Jack system and jack control element
Système de cric et élément de commande de cric

(30) Priorität: 04.04.2012 DE 102012205575
(43) Veröffentlichungstag der Anmeldung: 09.10.2013
(73) Patentinhaber: SOBEK Motorsporttechnik GmbH & Co. KG, 69493 Hirschberg (DE)
(72) Erfinder: Benoit, Laurent, 73800 La Chavanne (FR); Fucks, Thomas, Röthlein 97520 (DE); Hahn, Olaf, 68549 Ilvesheim (DE); Stöckl, Peter, 67240 Bobenheim-Roxheim (DE)
(74) Vertreter: Leckel, Ulf

(56) Entgegenhaltungen:
- WO-A2-2005/003014
- US-A1- 2006 043 352
- US-A1- 2010 176 359

## Beschreibung

Ausführungsbeispiele beziehen sich auf ein Wagenhebersystem für ein Kraftfahrzeug und ein Wagenheberbedienelement für ein solches Wagenhebersystem, wie sie beispielsweise bei Rennsportfahrzeugen, also beispielsweise bei Rennwagen, zum Einsatz kommen können.

Bei vielen Rennsportserien, jedoch auch bei einzelnen Rennsportveranstaltungen erhalten die dort eingesetzten Rennwagen während des Rennens neue Reifen. So kann ein entsprechender Reifenwechsel beispielsweise aufgrund nachlassender Leistung der betreffenden Reifen oder auch aufgrund sich verändernder Witterungsbedingungen ratsam oder angebracht sein.

Um einen solchen Reifenwechsel zu ermöglichen, ist es typischerweise notwendig, das betreffende Rennfahrzeug wenigstens teilweise von seiner Aufstandsfläche abzuheben, sodass der oder die betreffenden Räder diese nicht mehr berühren. Neben rein mechanischen, vom Boxenpersonal bei einem solchen Boxenstopp bedienter Wagenheber werden insbesondere im Breitensport, aber auch im professionellen Rennumfeld pneumatische Wagenheber eingesetzt. So werden konventionell während des Boxenstopps die Rennwagen durch in diesem fest montierte Pneumatikzylinder angehoben, um beispielsweise den zuvor beschriebenen Reifenwechsel durchzuführen.

Diese Pneumatiksysteme können jedoch sehr gefährlich sein, da bei diesen zum Teil sehr hohe Drücke zum Einsatz kommen. So sind bereits diverse, zum Teil sehr schwere Verletzungen durch entsprechende Pneumatiksysteme hervorgerufen, zumindest jedoch mit verursacht worden.

So weisen entsprechende konventionelle Pneumatiksysteme beispielsweise Pneumatikzylinder mit Rohren, Schläuchen, Ventilen und Anschlussrüssel für eine externe Luftdruckerzeugung auf. Durch die hohen Luftdrücke, die beispielsweise 30-40 bar erreichen und gegebenenfalls sogar übersteigen können, ist der Einsatz entsprechender Pneumatiksysteme durchaus nicht ungefährlich. So sind bereits entsprechende Schläuche geplatzt und andere Unfälle beispielsweise durch geborstene Pneumatikzylinder verursacht worden. Auch sind zum Teil bereits aufgrund technischen Versagens, das gegebenenfalls durch eine nicht vollständig ordnungsgemäß durchgeführte Wartung und Kontrolle begünstigt werden kann, Rennwagen durch ein ungleichmäßiges Ansteuern der Pneumatikzylinder unkontrolliert hoch katapultiert worden.

Diese Problematik kann jedoch nicht nur im Bereich der Motorsporttechnik auftreten. Auch straßenzugelassene Fahrzeuge können beispielsweise mit integrierten Wagenhebersystemen bestückt werden.

Die US 2010/0176359 A1 bezieht sich auf einen Fahrzeugwagenheber mit einer Ausschubrückkopplung für einen Wohnwagen. Die WO 2005/003014 A2 bezieht sich auf eine Kraftausübungsvorrichtung und ein entsprechendes Verfahren für Wohnmobile. Die US 2006/0043352 A1 bezieht sich auf ein in ein Fahrzeug einbaubares hydroelektrisches Wagenhebesystem.

Es besteht daher ein Bedarf, eine Verbesserung der Sicherheit im Zusammenhang mit Wagenhebersystemen zu erreichen. Außerdem liegt der vorliegenden Erfindung die Aufgabe zugrunde, ein Wagenhebersystem in einem Kraftfahrzeug zu optimieren, das im Rennsport zum Einsatz kommt, so dass eine leichte Interaktion mit dem Boxenpersonal während des Boxenstopps möglich und das Gewicht des Kraftfahrzeugs reduziert ist.

Die Lösung dieser Aufgabe erfolgt anhand der Merkmale nach Patentanspruch 1. Vorteilhafte Ausführungsformen sind Gegenstand der Unteransprüche.

Das erfindungsgemäße Wagenhebersystem für ein Kraftfahrzeug weist eine Mehrzahl von Wagenheberelementen auf. Die Wagenheberelemente sind an dem Kraftfahrzeug fest eingebaut, so dass das Kraftfahrzeug auf eine Ansteuerung des Wagenheberelements hin wenigstens teilweise angehoben wird. Die Wagenheberelemente sind ferner derart ausgebildet, um elektrisch betrieben zu werden. Den Wagenheberelementen liegt so die Erkenntnis zugrunde, dass die Verbesserung der Sicherheit dadurch erzielt werden kann, dass anstelle der konventionellen Lösung ein Wagenheberelement verwendet wird, das elektrisch betrieben wird. Bei einem solchen Wagenheberelement wird daher die zum wenigstens teilweisen Anheben des Kraftfahrzeugs notwendige Energie dem Wagenheberelement elektrisch zur Verfügung gestellt. Unfälle mit unter Druck stehenden Gasen oder Flüssigkeiten können daher in diesem Zusammenhang reduziert, wenn nicht sogar vollständig vermieden werden. Das Wagenhebersystem weist ferner einen elektrischen Kontakt auf, der beispielsweise mit wenigstens einem Steuergerät derart gekoppelt ist, um das Steuersignal an das wenigstens eine Steuergerät zu übermitteln. Auch ist das Wagenhebersystem derart mit der Mehrzahl von Wagenheberelementen gekoppelt, um eine zum Betrieb derselben notwendige elektrische Energie teilweise oder vollständig bereitzustellen. Auch ist der elektrische Kontakt mit der Mehrzahl von Wagenheberelementen mittelbar oder unmittelbar derart gekoppelt, um die Mehrzahl der Wagenheberelemente anzusteuern. So kann es gegebenenfalls möglich sein, ein Steuergerät nicht im Rahmen des Wagenhebersystems zu implementieren. Dieses kann als Teil eines Wagenheberbedienelements ausgeführt sein, wenn dieses beispielsweise Signale eines Sensors des Wagenheberelements empfängt, aus dem eine Information über den Ausfahrzustand des Wagenheberelements ableitbar oder umfasst ist. Bei einem solchen Sensor kann es sich beispielsweise um einen Sensor zur Erfassung eines linearen Weges oder eine linearen Position, beispielsweise um einen Lagesensor, handeln. Es kann sich jedoch ebenso um einen einen Winkel oder eine Drehbewegung erfassenden Sensor handeln, aus dem eine entsprechende Information ableitbar ist. Der elektrische Kontakt ist hierbei an einem Äußeren des Kraftfahrzeugs zugänglich angeordnet, um eine leichte Interaktion mit dem Boxenpersonal während des Boxenstopps zu ermöglichen. So kann der elektrische Kontakt beispielsweise als Anschlussstecker an einem Äußeren einer Karosserie des Kraftfahrzeugs angeordnet sein. Hierdurch kann gegebenenfalls die Integration von Energiequellen für den oder die Wagenheberelemente im Rahmen des Kraftfahrzeugs eingespart werden. Ebenso kann im Falle der Implementierung der Übermittlung des Steuersignals durch den elektrischen Kontakt gegebenenfalls eine Sicherheit weiter verbessert werden, da ein Risiko einer Fehlbedienung durch die Boxencrew reduziert wird. Ein solcher elektrischer Kontakt kann beispielsweise derart ausgebildet sein, um mit einem weiter unten beschriebenen Wagenheberbedienelement zusammenzuwirken.

Ein Kraftfahrzeug kann hierbei beispielsweise ein Rennwagen oder Rennsportfahrzeug sein, welches beispielsweise auf Basis eines Personenkraftwagens oder eines Lastkraftwagens aufgebaut ist. Es kann sich so bei einem solchen Kraftfahrzeug beispielsweise um ein vergleichsweise seriennahes Fahrzeug für den Breitensport, also beispielsweise für Langstreckenrennen oder Markenpokale, oder auch um einen Tourenwagen handeln. Bei den Kraftfahrzeugen kann es sich jedoch auch um Prototypen oder andere, individuell für eine Rennserie oder ein bestimmtes Rennen konzeptionierte und hergestellte Rennsportfahrzeuge handeln.

Das Wagenheberelement gemäß einem Ausführungsbeispiel kann eine Verbindungsstruktur aufweisen, mit deren Hilfe das Wagenheberelement in dem Kraftfahrzeug fest eingebaut werden kann. Die Verbindungsstruktur kann so beispielsweise ein Gewinde, ein Anschweißblech oder eine andere Struktur umfassen, mit deren Hilfe das Wagenheberelement in dem Kraftfahrzeug fest eingebaut werden kann. Hierbei ist je nach Art der Einbautechnik ein späterer Wiederausbau, beispielsweise zu Wartungszwecken oder auch zum Austausch des betreffenden Wagenheberelements, durchaus möglich. Das Wagenheberelement ist jedoch derart ausgestaltet, dass dieses während des Betriebs des Kraftfahrzeugs, also insbesondere auch während seiner Fahrt, in dem Kraftfahrzeug an der fest eingebauten Position verbleiben kann.

In einer vorteilhaften Ausführungsform des erfindungsgemäßen Wagenhebersystems kann ein Wagenheberelement eine elektrische Antriebseinheit und ein Umformelement umfassen, wobei die Antriebseinheit ausgebildet ist, um auf die Ansteuerung hin eine Drehbewegung zu erzeugen. Das Umformelement kann derart ausgebildet sein, um die Drehbewegung in eine lineare Bewegung umzusetzen, durch die das Kraftfahrzeug wenigstens teilweise angehoben wird. So kann beispielsweise durch das Umformelement im Zusammenspiel mit der elektrischen Antriebseinheit ein elektrischer Linearantrieb realisiert werden, mit dessen Hilfe das Kraftfahrzeug wenigstens teilweise, also durchaus auch vollständig, durch das Wagenheberelement angehoben wird. Durch die Verwendung der elektrischen Antriebseinheit und des Umformelements können hierdurch mechanisch stabile und daher belastbare und dennoch kleine, kompakte und gegebenenfalls leichte Wagenheberelemente implementiert werden.

In einer vorteilhaften Ausführungsform des erfindungsgemäßen Wagenhebersystems weist die elektrische Antriebseinheit einen Elektromotor auf. Darüber hinaus kann die elektrische Antriebseinheit jedoch gegebenenfalls auch ein Getriebe umfassen, welches zu einer Anpassung der von dem Elektromotor ausgegebenen Drehzahl herangezogen werden kann.

In einer vorteilhaften Ausführungsform des erfindungsgemäßen Wagenhebersystems weist der Elektromotor ein Leistungsgewicht von wenigstens 5 W/g auf. Das Leistungsgewicht ist hierbei definiert als die von dem Elektromotor ausgegebene maximale Leistung oder Nennleistung bezogen auf sein Gewicht. Es kann sich so bei dem Elektromotor um einen Hochleistungsmotor handeln, durch den gegebenenfalls auf Kosten anderer Parameter ein Gewicht des Wagenheberelements reduziert werden kann. Hierdurch kann also der Einsatz eines Wagenheberelements gemäß einem Ausführungsbeispiel gegebenenfalls besser auf den Rennsporteinsatz abgestimmt werden. Grundsätzlich kann hierbei mit steigendem Leistungsgewicht typischerweise eine leichtere, kleinere und/oder kompaktere Implementierung eines Wagenheberelements gemäß einem Ausführungsbeispiel erzielbar sein. So kann es gegebenenfalls ratsam sein, einen Elektromotor mit einem Leistungsgewicht von wenigstens 8 W/g oder von wenigstens 10 W/g vorzusehen. Gegebenenfalls kann es jedoch ratsam sein, das Leistungsgewicht zu begrenzen, wenn mit einer Steigerung des Leistungsgewichts gegebenenfalls eine Verschlechterung eines Gesamtkompromisses im Hinblick auf weitere Parameter, beispielsweise eine Lebensdauer des Elektromotors, einhergehen könnte. Der Elektromotor kann hierbei bürstenlos ausgeführt sein, wodurch sich seine Betriebssicherheit aufgrund des fehlenden Schleifkontakts gegebenenfalls weiter verbessern lassen kann. Er kann jedoch auch mit Schleifkontakten (z. B. Bürsten) implementiert werden.

In einer vorteilhaften Ausführungsform des erfindungsgemäßen Wagenhebersystems umfasst das Umformelement einen Gewindetrieb. Hierdurch kann es möglich sein, eine mechanisch robuste, stabile und damit auch unter harten Rennbedingungen mit einer hohen Wahrscheinlichkeit zuverlässig arbeitenden Implementierung eines Wagenheberelements zu ermöglichen.

In einer vorteilhaften Ausführungsform des erfindungsgemäßen Wagenhebersystems weist der Gewindetrieb ein linear bewegbares Bauteil auf, das mit einem Aufstandselement mechanisch gekoppelt ist, wobei das Aufstandselement ausgebildet ist, um mit einer Aufstandsfläche, auf der das Kraftfahrzeug angeordnet ist oder steht, auf die Ansteuerung hin in Kontakt zu treten, um das Kraftfahrzeug wenigstens teilweise anzuheben. Bei dem linear bewegbaren Bauteil des Gewindetriebs kann es sich beispielsweise um einen Hubzylinder oder eine Schubstange oder eine andere mit einer Mutter oder einem anderen entsprechenden Bauteil des Gewindetriebs verbundenes Element handeln. Das Aufstandselement kann beispielsweise derart ausgeformt sein, dass dieses eine vergleichsweise kleine Auflagefläche auf der Aufstandsfläche ausbildet, um so auch bei gegebenenfalls vorhandenen Unebenheiten der Aufstandsfläche einen sicheren Stand des Wagenheberelements und damit des Kraftfahrzeugs zu ermöglichen. So kann das Aufstandselement beispielsweise eine wenigstens abschnittsweise im Wesentlichen sphärische Ausgestaltung aufweisen. Das Aufstandselement kann ebenso als Fuß mit einem im Wesentlichen ebenen Abschnitt ausgeformt sein. Das Aufstandselement kann hierbei aus einem Kunststoff, einem Gummi, einem Metall, einer Metalllegierung, also beispielsweise aus Titan oder einer Titanlegierung, einem faserverstärkten Material (z. B. Kunststoff) oder einem Verbundwerkstoff gefertigt sein.

In einer vorteilhaften Ausführungsform des erfindungsgemäßen Wagenhebersystems können die einzelnen Wagenheberelemente unterschiedlich, jedoch auch identisch ausgeführt sein. Es kann optional darüber hinaus wenigstens ein Steuergerät umfassen, das mit wenigstens einem Wagenheberelement der Mehrzahl von Wagenheberelementen derart gekoppelt und ausgebildet ist, um auf ein Steuersignal hin das wenigstens eine mit dem Steuergerät gekoppelte Wagenheberelement anzusteuern. Das wenigstens eine Steuergerät kann auch Teil eines Wagenheberbedienelements sein, wie dies weiter unten beschreiben ist.

Durch den Einsatz des optional implementierten elektrischen Steuergeräts kann so über das beispielsweise elektrisch, optisch oder drahtlos übertragene Steuersignal der oder die Wagenheberelemente angesteuert werden. So kann also nicht nur die zum Anheben des Kraftfahrzeugs notwendige Energie in Form elektrischer Energie den Wagenheberelementen bereitgestellt werden, auch durch den Einsatz des elektrischen oder elektronischen Steuergeräts und das entsprechende Steuersignal kann so der Einsatz von unter Druck stehenden Medien reduziert werden. Als Folge kann auch hierdurch die Sicherheit gegebenenfalls weiter gesteigert werden.

Ein Wagenheberbedienelement gemäß einem Ausführungsbeispiel für ein Wagenhebersystem gemäß einem Ausführungsbeispiel umfasst eine Energiequelle, beispielsweise einen Lithium-Polymer-Akku, und ein elektrisches Schaltelement, beispielsweise einen elektrischen Schalter oder einen elektrischen Taster, und/oder ein Steuergerät, das ausgebildet ist um die Mehrzahl der Wagenheberelemente des Wagenhebersystems anzusteuern. Darüber hinaus umfasst es einen elektrischen Gegenkontakt, der derart ausgebildet ist, um mit dem elektrischen Kontakt des Wagenhebersystems derart gekoppelt zu werden, um die Energiequelle mit dem Wagenhebersystem elektrisch zu verbinden und um ein von dem elektrischen Schaltelement bereitgestelltes Steuersignal dem Wagenhebersystem bereitzustellen, und/oder um die Mehrzahl der Wagenheberelemente des Wagenhebersystems anzusteuern. Je nach konkreter Implementierung kann durch das Bereitstellen des elektrischen Schaltelements im Rahmen des Wagenheberbedienelements wiederum die Sicherheit bei der Bedienung dadurch verbessert werden, dass eine Fehlauslösung des Wagenhebersystems unwahrscheinlicher wird. Ergänzend oder alternativ kann durch die Implementierung der Energiequelle gegebenenfalls eine Implementierung einer vergleichbaren Energiequelle im Rahmen des Kraftfahrzeugs entfallen. Hierdurch kann also gegebenenfalls Bauraum und/oder Gewicht im Rahmen des Kraftfahrzeugs eingespart bzw. - je nach Reglement - durch andere Zusatzgewichte gezielter platziert werden. Das Steuersignal kann hierbei auch durch das Bereitstellen der elektrischen Energie für die Mehrzahl von Wagenheberelementen erzeugt werden bzw. mit dem Bereitstellen der elektrischen Energie identisch sein.

Hierbei umfasst eine mechanische Kopplung zweier Komponenten sowohl eine unmittelbare, wie auch eine mittelbare Kopplung. Elektrische oder andere Komponenten sind hierbei miteinander gekoppelt, wenn diese einen Signalaustausch zwischen den betreffenden Komponenten ermöglichen. So kann die entsprechende Kopplung beispielsweise elektrisch, optisch, magnetisch oder mittels Funktechnik implementiert und umgesetzt sein.

Nachfolgend werden unter Bezugnahme auf die beigefügten Figuren Ausführungsbeispiele näher beschrieben, wobei die Fig. 1 bis 4 erfindungsgemäße Ausführungsformen zeigen, während die Fig. 5 bis 7 lediglich dem besseren Verständnis dienen.
Fig. 1 zeigt eine Seitenansicht eines Wagenheberelements gemäß einem Ausführungsbeispiel;
Fig. 2 zeigt eine schematische Darstellung eines Wagenhebersystems gemäß einem Ausführungsbeispiel an einem Kraftfahrzeug;
Fig. 3 zeigt eine schematische Darstellung eines Wagenhebersystems gemäß einem weiteren Ausführungsbeispiel, bei der das Kraftfahrzeug von der Seite gezeigt ist und die Wagenheberelemente eingezogen sind;
Fig. 4 zeigt eine Fig. 3 vergleichbare Darstellung, bei der die Wagenheberelemente jedoch ausgefahren sind und das Kraftfahrzeug angehoben ist;
Fig. 5 zeigt eine schematische Darstellung eines Wagenhebersystems gemäß einem Ausführungsbeispiel an einem Kraftfahrzeug, wobei das Wagenhebersystem eine Energiequelle und ein Schaltelement zum Aktivieren des Wagenhebersystems umfasst;
Fig. 6 zeigt eine schematische Darstellung des Wagenhebersystems aus Fig. 5, wobei das Kraftfahrzeug von einer Seite gezeigt ist und die Wagenheberelemente eingezogen sind; und
Fig. 7 zeigt das Wagenhebersystem aus Fig. 6, bei dem die Wagenheberelemente ausgefahren und das Kraftfahrzeug angehoben ist.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

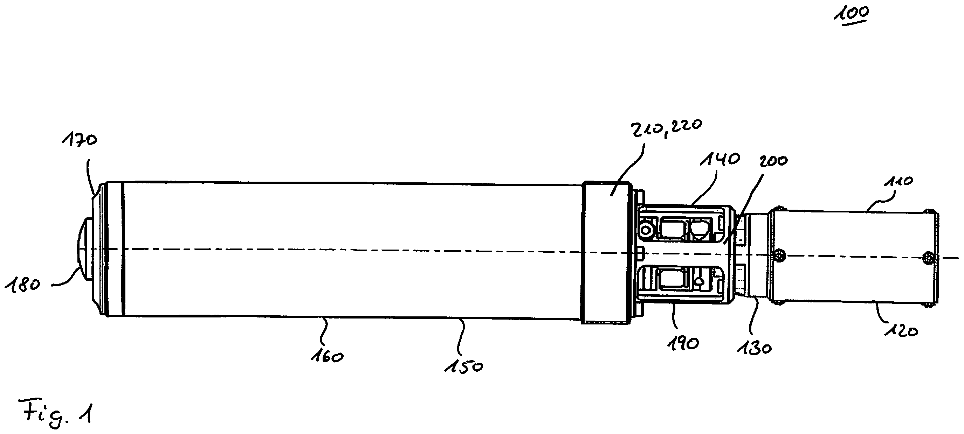

Fig. 1 zeigt eine Seitenansicht eines Wagenheberelements 100 gemäß einem Ausführungsbeispiel. Wie die nachfolgende Erörterung zeigen wird, ist das Wagenheberelement 100 hierbei derart ausgebildet, um an einem Kraftfahrzeug derart fest eingebaut zu werden, dass das Kraftfahrzeug auf eine Ansteuerung des Wagenheberelements 100 hin wenigstens teilweise angehoben wird. Das Wagenheberelement 100 ist hierbei derart ausgebildet, um elektrisch betrieben zu werden.

Zu diesem Zweck weist das Wagenheberelement 100 eine elektrische Antriebseinheit 110 auf, die bei dem hier gezeigten Ausführungsbeispiel einen bürstenlosen Elektromotor 120 und ein Getriebe 130 zur Anpassung der von dem Elektromotor 120 ausgegebenen Drehbewegung hinsichtlich seiner Drehzahl umfasst. Bei anderen Ausführungsbeispielen kann anstelle eines bürstenlosen Elektromotors 120 auch ein solcher zum Einsatz kommen, bei dem Schleifkontakte, beispielsweise in Form von Bürsten, verwendet werden. Ein solcher Elektromotor 120 wird so zum Teil auch als Bürstenmotor bezeichnet.

Die elektrische Antriebseinheit 110 ist hierbei über eine Kupplung 140 mit einem Umformelement 150 mechanisch derart gekoppelt, dass das Umformelement 150 eine von der elektrischen Antriebseinheit bereitgestellte Drehbewegung in eine lineare Bewegung umsetzt, über die das Kraftfahrzeug wenigstens teilweise von einer in Fig. 1 nicht gezeigten Aufstandsfläche angehoben wird. So handelt es sich bei dem Umformelement 150 im vorliegenden Fall um einen Gewindetrieb 160, der beispielsweise als Kugelgewindetrieb, Rollengewindetrieb oder als Planetengewindetrieb implementiert sein kann. Diese weisen häufig einen hohen Wirkungsgrad auf.

So weist das Umformelement 150 einen Hubzylinder 170 auf, der ein Aufstandselement 180 umfasst, welches so ausgebildet ist, um mit einer Aufstandsfläche, auf der das Kraftfahrzeug steht, auf die Ansteuerung hin in Kontakt zu treten, um so das Kraftfahrzeug teilweise oder vollständig anzuheben. Das Aufstandselement 180, wie es in Fig. 1 gezeigt ist, ist hierbei wenigstens abschnittsweise im Wesentlichen sphärisch ausgeführt, um eine vergleichsweise kleine Berührfläche mit der Aufstandsfläche zu bilden, um so auch bei einer unebenen Aufstandsfläche einen sicheren Stand des Kraftfahrzeugs zu ermöglichen. So kann das Aufstandselement 180 beispielsweise einen Durchmesser aufweisen, der 50 % eines Außendurchmessers des Umformelements 150 nicht übersteigt. Er kann entsprechend auch kleiner sein, also einen Durchmesser von beispielsweise nur 5 % umfassen.

Bei anderen Ausführungsbeispielen kann jedoch das Aufstandselement 180 auch größer als die zuvor genannte Grenze ausgeführt werden. Je nach konkreter Implementierung kann jedoch durchaus auch eine kleinere Implementierung sinnvoll sein. Das Aufstandselement 180 kann hierbei beispielsweise aus einem Gummi oder einem anderen Kunststoff gefertigt sein, das im Falle eines Verschleißes ausgetauscht werden kann. Ebenso kann es bei anderen Ausführungsbeispielen aus einem anderen Material, beispielsweise einem Metall oder einer Metalllegierung wenigstens teilweise hergestellt sein. So kann beispielsweise aus Gewichtsgründen auch einfach nur ein Titanfuß zur Anwendung gebracht werden.

Bei dem in Fig. 1 gezeigten Wagenheberelement 100 erzeugt so der Elektromotor 120 der elektrischen Antriebseinheit 110 an einer Ausgangswelle im Falle einer entsprechenden Ansteuerung eine Drehbewegung, die dann durch das Getriebe 130 hinsichtlich ihrer Drehzahl verändert wird. Über die Kupplung 140 wird die Drehbewegung an das Umformelement 150 weitergegeben, wo diese in eine entsprechende lineare Bewegung des Hubzylinders 170 und des Aufstandselements 180 umgewandelt wird. Hierdurch besteht die Möglichkeit, gegebenenfalls einen sehr schnellen, starken, aufgrund der elektrischen Ansteuerung gut regelbaren, sehr leichten, kompakten und sicheren elektromechanischen Hubzylinder für den Renneinsatz zu schaffen. Der Elektromotor 120 ist hierbei als bürstenloser Hochleistungselektromotor ausgeführt, wobei der Zylinder 170 auf Basis des Gewindetriebs 160 arbeitet. Hierdurch kann das Anheben und Absenken des Kraftfahrzeugs kontrolliert durch eine entsprechende elektronische Steuerung erfolgen.

Aufgrund der Verwendung des Elektromotors 120 im Rahmen der elektrischen Antriebseinheit 110 wird die Wagenhebereinheit 100 auch als elektrischer Wagenheber oder als E-Jack zum Heben von Rennwagen bezeichnet. Das Wagenheberelement 100 kann also zum Heben und Senken eines Rennwagens während eines Boxen- oder Pitstopps verwendet werden.

Im Vergleich zu einer konventionellen Lösung, bei der ein Pneumatiksystem zum Anheben und Absenken des Rennwagens verwendet wird, kann so eine sehr fein an den Kraftwagen angepasste Hebe- und Absenkbewegung mit einem entsprechend hohen Gleichlauf der beteiligten Wagenheberelemente 100, also aller Zylinder bzw. Hubzylinder 170, erzielt werden. Hierdurch kann ein höherer Sicherheitsstandard im Vergleich zu einer pneumatischen Lösung gerade im Bereich der Motorsporttechnik im Vergleich zu einer pneumatischen Lösung erzielbar sein. So ermöglicht der Einsatz eines Wagenheberelements 100 gemäß einem Ausführungsbeispiel eine Substitution der Pneumatikzylinder im Motorsport im Bereich der Wagenanhebung und - absenkung durch den Einsatz eines entsprechenden Linearantriebs.

Die Kupplung 140 dient hierbei zur mechanischen Kopplung der Ausgangswelle der elektrischen Antriebseinheit 110 und eines entsprechenden Eingangsbauteils des Umformelements 150, also beispielsweise einer Spindel des Gewindetriebs 160. Bei dem hier gezeigten Ausführungsbeispiel eines Wagenheberelements 100 ist die Kupplung 140 als eine Klauenkupplung 190 in einem offenen Kupplungsgehäuse 200 implementiert. Anstelle einer Klauenkupplung 190 können jedoch auch andere Kupplungstechniken, beispielsweise Elastomerkupplungen oder Wellenkupplungen zur Kopplung der betreffenden Wellen eingesetzt werden. Je nach konkreter Implementierung eines Wagenheberelements 100 kann die Kupplung 140 auch einfacher ausgestaltet bzw. gegebenenfalls sogar vollständig entfallen. So können beispielsweise die betreffenden Wellen - sofern dies notwendig ist - auch mithilfe einer anderen formschlüssigen, stoffschlüssigen und/oder kraftschlüssigen Verbindungstechnik miteinander verbunden werden. So können beispielsweise die Wellen auch miteinander verschraubt werden, wobei gegebenenfalls eine entsprechende Konterung sinnvoll sein kann. Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande.

Bei dem Elektromotor 120 handelt es sich bei dem hier gezeigten Ausführungsbeispiel eines Wagenheberelements 100 um einen Hochleistungselektromotor, der ein Leistungsgewicht von wenigstens 5 W/g aufweist. Das Leistungsgewicht ist hierbei die maximale Ausgangsleistung oder auch die Nennleistung des betreffenden Motors, die auf seine Masse bezogen wird.

Gerade im Rennsportbereich bzw. im Motorsportbereich besteht grundsätzlich die Tendenz, Komponenten möglichst leicht auszuführen. So kann es gegebenenfalls ratsam sein, den Elektromotor 120 auch mit höheren Leistungsgewichten von beispielsweise wenigstens 8 W/g oder wenigstens 10 W/g zu implementieren. Im vorliegenden Ausführungsbeispiel weist der Elektromotor 120 beispielsweise eine Leistung von 4 kW bei einem Gewicht von 300 g auf. Je nach konkreter Ausgestaltung kann es jedoch auch ratsam sein, das Leistungsgewicht nach oben zu beschränken, wenn beispielsweise andere Parameter, wie etwa die Lebensdauer des betreffenden Elektromotors, über Gebühr bei einer weiteren Erhöhung des Leistungsgewichts leiden würden. Es kann also ratsam sein, das Leistungsgewicht zugunsten eines Gesamtkompromisses, der neben der Leistung und dem Gewicht auch weitere Parameter berücksichtigt, zu beschränken. Dies kann beispielsweise im semiprofessionellen Einsatzgebiet bzw. im Breitensport sinnvoll sein, wo die Bereitschaft, hohe Kosten für Anschaffung bzw. Wartung zu übernehmen, geringer ausfällt, da in diesen Rennserien häufig die Zeit eines Boxenstopps ein weniger gravierender Erfolgsfaktor als im professionellen Umfeld, beispielsweise bei Tourenwagen oder Prototypen (LMP1 oder LMP2), ist.

Selbstverständlich können jedoch auch andere Elektromotoren 120 im Rahmen der elektrischen Antriebseinheit 110 zum Einsatz kommen. Der Elektromotor 120 ist hierbei bürstenlos ausgeführt, um einen möglichen Verschleiß zu reduzieren und damit seine Lebensdauer zu erhöhen. Aber auch hier gilt das zuvor Gesagte, dass nämlich grundsätzlich auch andere Ausführungsformen implementierbar sind. Bei dem hier gezeigten Ausführungsbeispiel weist der Elektromotor 120 eine nominale Drehgeschwindigkeit von etwa 3125 Umdrehungen/min auf. Seine maximale Geschwindigkeit liegt im Bereich von etwa 3600 Umdrehungen. Hierbei entwickelt er bei seiner maximalen axialen Belastung von etwa 2500 N ein Drehmoment von etwa 4,55 Nm und übersteigt damit immer noch ein Zurückdrehen des Drehmoments bei der maximalen Axiallast von 2500 N, die etwa 3,86 Nm beträgt. Um jedoch eine Anpassung der vorgenannten Drehzahlen an die Bedürfnisse des Gewindetriebs 160 zu ermöglichen, weist das Wagenheberelement 100 gerade das Getriebe 130 auf, welches jedoch als optionale Komponente gegebenenfalls auch entfallen kann. Kann so beispielsweise ein entsprechender Elektromotor mit einer höheren Drehzahl, gegebenenfalls jedoch auch mit einer geringeren Drehzahl verwendet werden, kann so eine Implementierung des Getriebes 130 gegebenenfalls entfallen. Lediglich der Vollständigkeit halber sei an dieser Stelle darauf hingewiesen, dass die eingesetzte Kupplung 140 ein maximal übertragbares Drehmoment von etwa 7,4 Nm aufweist.

Selbstverständlich handelt es sich bei den zuvor genannten Zahlen lediglich um beispielhafte Werte, die bei anderen Ausführungsbeispielen von den vorgenannten Werten - je nach geplantem Anwendungsgebiet - zum Teil sehr deutlich abweichen können.

Zur Befestigung des Wagenheberelements 100 in dem betreffenden Kraftfahrzeug weist dieses ferner eine Verbindungsstruktur 210 auf, die im vorliegenden Fall als Gewinde 220 ausgeführt ist. Über die Verbindungsstruktur 210 kann das Wagenheberelement 100 fest in dem Kraftfahrzeug eingebaut werden, wobei die Verwendung des Gewindes 220 auch eine Lösung der Verbindung, also einen Wiederausbau des Wagenheberelements 100 zu Wartungszwecken oder zum Austausch ermöglicht. Selbstverständlich können bei anderen Ausführungsbeispielen andere Verbindungsstrukturen 210 als das gezeigte Gewinde 220 zum Einsatz kommen. So können beispielsweise Anschweißbleche oder andere Strukturen verwendet werden, die gegebenenfalls einen weniger raschen Wechsel des Wagenheberelements 100 ermöglichen.

Im Unterschied zu einem konventionellen pneumatischen System kann so der Einsatz eines Wagenheberelements 100 gemäß einem Ausführungsbeispiel eine einfachere Handhabung und eine Erhöhung der Betriebssicherheit ermöglichen. Darüber hinaus kann es im Vergleich zu einem pneumatischen System eine geringere Komplexität außerhalb des Fahrzeugs ermöglichen, wie dies nachfolgend noch erläutert wird. So kann es beispielsweise möglich sein, außerhalb des Fahrzeugs lediglich eine Energiequelle, beispielsweise eine Batterie, sowie entsprechende Anschlusskabel und gegebenenfalls weitere Bedienelemente im Rahmen eines Wagenheberbedienelements vorzusehen. Auch kann im Vergleich zu einem pneumatischen System gegebenenfalls ein gleichmäßigeres Anheben des Fahrzeugs erzielbar sein. Ebenso kann, wie nachfolgend noch erläutert wird, gegebenenfalls eine leichtere Integration in die bestehenden Systeme des Kraftfahrzeugs aufgrund der elektrischen Ansteuerung, also aufgrund der Elektrifizierung realisiert werden.

Konventionelle Pneumatiksysteme stellen hingegen eine bewährte Technik dar, die ein schnelles Anheben und Ablassen des Fahrzeugs ermöglicht. Wie jedoch eingangs erläutert wurde, besteht bei ihrem Betrieb eine nicht unerhebliche Gefahr durch hohe Systemdrücke. Ebenso erfordern sie häufig eine hohe Komplexität außerhalb des betreffenden Fahrzeugs, da beispielsweise eine Gasflasche, Druckminderer, Schläuche sowie eine Luftlanze zur Versorgung des Kraftfahrzeugs mit der Druckluft vorzusehen sind. Die Technik der pneumatischen Systeme ist darüber hinaus im Wesentlichen technisch ausgereizt. Bei vielen Anwendungsbeispielen kommt es immer wieder darüber hinaus dazu, dass ein gleichmäßiges Anheben des Fahrzeugs trotz erheblicher Bemühungen nicht erreicht wird.

Ein konventionelles pneumatisches System beinhaltet typischerweise einen Empfänger für eine Luftlanze, an dem die Luftlanze zur Versorgung des Kraftfahrzeugs mit der Druckluft angeschlossen werden kann. Die Luftlanze verfügt hierbei typischerweise über einen Anschluss für eine Druckluftflasche, bei der es sich beispielsweise um eine Taucherflasche handeln kann.

In dem Rennfahrzeug sind dann - verbunden über Druckluftleitungen mit dem Empfänger für die Luftlanze - mehrere, beispielsweise drei Luftheber angeordnet, über die das Fahrzeug angehoben werden kann. Sind drei Luftheber implementiert, können so beispielsweise zwei im Bereich des Fahrzeughecks, jeweils zu beiden Seiten des Fahrzeugs verteilt und ein Luftheber zentral im Vorderbereich des Fahrzeugs angeordnet sein. Optional kann ein solches pneumatisches System ebenso einen oder mehrere Schnellentlüfter, eingesetzt werden, um ein Ablassen der Druckluft aus den Lufthebern zu beschleunigen. So können beispielsweise für den einzelnen vorderen Luftheber ein vorderer Schnellentlüfter und für die beiden hinteren Luftheber ein zentraler Schnellentlüfter implementiert werden.

Im Breitensport, also beispielsweise im Langstreckenbereich (z. B. VLN-Rennserie), aber auch in Markenpokalen, wie beispielsweise dem Porsche-Carrera-Cup oder der Lamborghini-Super-Trofeo, werden vergleichsweise geringe Drücke zwischen etwa 15 und 35 bar verwendet. Im professionellen Bereich, also beispielsweise im Tourenwagenbereich oder im Prototypenbereich (LMP1, LMP2) werden mit deutlich höheren Drücken von typischerweise 35 bis 40 bar gearbeitet.

Im Bereich des Ablassens des Fahrzeugs kann im Breitensportbereich und im semiprofessionellen Bereich eine Ablasszeit ohne Schnellentlüfter von 2 bis 4 s, mit Schnellentlüftern im Bereich zwischen 0,2 und 1 s erzielt werden. Im professionellen Einsatzgebiet werden typischerweise Schnellentlüfter verwendet, sodass die vorgenannten Rennfahrzeuge in der Regel in ca. 0,2 s ablassbar sind.

Mithilfe eines Wagenheberelements 100 gemäß einem Ausführungsbeispiel sind - je nach Implementierung - vergleichbare Anhebe- und Ablasszeiten erzielbar.

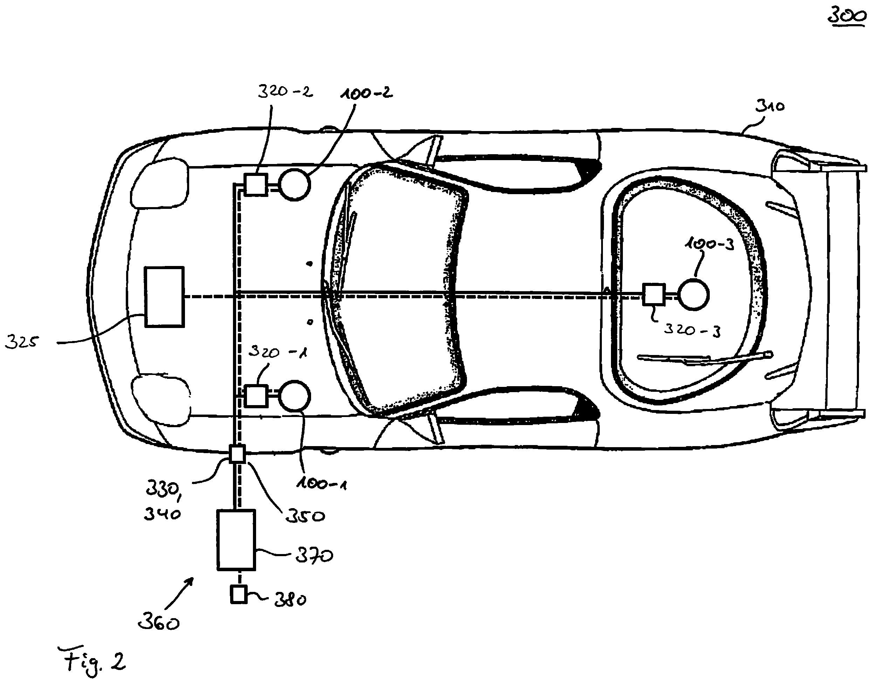

Im Folgenden werden im Zusammenhang mit den Fig. 2 bis 7 unterschiedliche Ausführungsbeispiele eines Wagenhebersystems 300 näher beschrieben. Hierbei werden schematische Darstellungen der entsprechenden Anschlusskonfigurationen gezeigt.

Fig. 2 zeigt eine schematische Darstellung eines Wagenhebersystems 300 gemäß einem Ausführungsbeispiel anhand einer Aufsicht auf ein Kraftfahrzeug 310, bei dem es sich genauer gesagt um einen Sport- oder Tourenwagen handelt. Das Wagenhebersystem 300 umfasst im vorliegenden Fall eine Mehrzahl von Wagenheberelementen 100 gemäß einem Ausführungsbeispiel, von denen zwei Wagenheberelemente 100-1, 100-2 im Vorderteil des Fahrzeugs zu beiden Seiten des Kraftfahrzeugs 310 angeordnet sind, während ein drittes Wagenheberelement 100-3 zentral im Heckbereich des Fahrzeugs angeordnet ist. Die Wagenheberelemente 100 können hierbei beispielsweise im Bereich zwischen den Radaufhängungen des Kraftfahrzeugs 310 angeordnet sein.

Neben den Wagenheberelementen 100 weist das Wagenhebersystem 300 ferner eine Mehrzahl von elektrischen Steuergeräten 320 auf, die jeweils einem Wagenheberelement 100 zugeordnet und in seiner unmittelbaren Nähe angeordnet sind. Die elektrischen oder elektronischen Steuergeräte 320 sind so mit ihren jeweiligen Wagenheberelementen 100 über Steuerleitungen elektrisch verbunden. Darüber hinaus sind sie mit einer Motorelektronikeinheit 325 und einem elektrischen Kontakt 330, der beispielsweise als Verbindungsstecker 340 ausgeführt sein kann, gekoppelt. Anstelle der Motorelektronikeinheit 325 können die Steuergeräte 320 auch mit einer anderen Elektronikkomponente des Kraftfahrzeugs 310 gekoppelt sein, sofern eine solche Kopplung überhaupt vorgesehen ist.

Über die optionale Kopplung an die Motorelektronikeinheit 325 kann so beispielsweise eine Ansteuerung der Wagenheberelemente 100 durch die Steuergeräte 320 in Abhängigkeit von einer Aktivierung eines Geschwindigkeitsbegrenzers (Speed-Limiter) abhängig gemacht werden, um so ein unbeabsichtigtes Auslösen der Wagenheberelemente 100 während des Rennbetriebs zu unterbinden. So wird während des eigentlichen Rennens ein entsprechender Geschwindigkeitsbegrenzer typischerweise nicht aktiviert, während im Bereich der Boxengasse zur Einhaltung einer Geschwindigkeitsbeschränkung typischerweise ein entsprechender Geschwindigkeitsbegrenzer aktiviert ist. Selbstverständlich können optional andere Informationen der Motorelektronikeinheit 325 oder eines anderen Steuergeräts des Kraftfahrzeugs 310, beispielsweise Informationen hinsichtlich der Geschwindigkeit, als zusätzliche Sicherungsbedingungen zum Auslösen bzw. Ansteuern der Wagenheberelemente 100 herangezogen werden.

Über den Verbindungsstecker 340 kann über einen entsprechenden elektrischen Gegenkontakt 350 ein Wagenheberbedienelement 360 an das Kraftfahrzeug und an das Wagenhebersystem 300 gekoppelt werden. Das Wagenheberbedienelement 360 kann so beispielsweise eine Energiequelle, also eine externe Stromversorgung, wie beispielsweise einen Lithium-Polymer-Akku, und ergänzend oder alternativ ein elektrisches Schaltelement 380 zur Ansteuerung der Steuergeräte 320 umfassen. So kann das elektrische Schaltelement 380 beispielsweise als elektrischer Schalter oder elektrischer Taster ausgeführt sein, der gerade so verschaltet ist, dass dieser ein Steuersignal an die Steuergeräte 320 der Wagenheberelemente 100 übermittelt. Empfangen die Steuergeräte 320 das entsprechende Steuersignal, können diese in Abhängigkeit von gegebenenfalls weiteren Informationen, beispielsweise den vorangegangenen Informationen, die sie von der Motorelektronikeinheit 325 oder einem vergleichbaren Steuergerät erhalten, die Wagenheberelemente 100 ansteuern. Das elektrische Schaltelement 380 stellt so einen Aktivierungsmechanismus für das Wagenhebersystem 300 dar.

Zur Versorgung der Wagenheberelemente 100 weisen sowohl das Wagenheberbedienelement 360 in der hier gezeigten Ausführung wie auch das Wagenhebersystem 300 des Kraftfahrzeugs 310 parallel zu den Steuerleitungen eine Energieversorgungsleitung auf, mit deren Hilfe die Wagenheberelemente 100 mit der zu ihrem elektrischen Betrieb notwendigen Energie versorgt werden können. Hierbei können auch optional die Steuergeräte 320 von der Energiequelle 370 mit Energie versorgt werden.

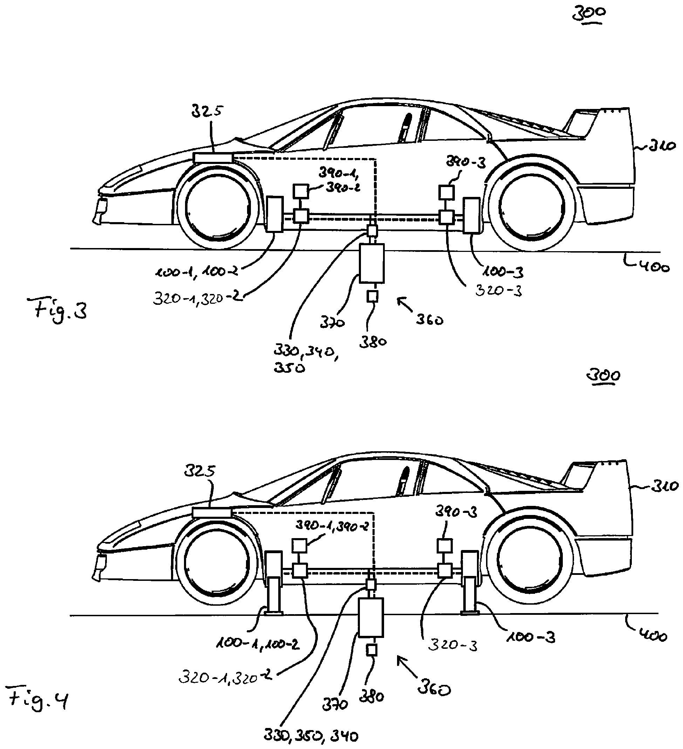

Fig. 3 und Fig. 4 zeigen ein weiteres Ausführungsbeispiel eines Wagenhebersystems 300, welches im Rahmen eines Kraftfahrzeugs 310 eingebaut bzw. installiert ist. Das in den Fig. 3 und 4 gezeigte Wagenhebersystem 300 unterscheidet sich von dem in Fig. 2 im Wesentlichen lediglich dadurch, dass die Lage des elektrischen Kontakts 330 und damit des elektrischen Gegenkontakts 350 des Wagenheberbedienelements 360 weiter zu einer zentraleren Position zwischen den Radaufhängungen des Kraftfahrzeugs 310 angeordnet ist.

Darüber hinaus unterscheidet sich das Wagenhebersystem 300 aus den Fig. 3 und 4 von dem in Fig. 2 gezeigten dadurch, dass dieses neben der externen Energiequelle 370 ferner interne zusätzliche Energiequellen 390 aufweist, die jeweils im Bereich der Wagenheberelemente 100 und ihrer Steuergeräte 320 angeordnet sind. So umfasst das in den Fig. 3 und 4 gezeigte Ausführungsbeispiel des Wagenhebersystems 300 folglich zwei zusätzliche Energiequellen 390-1 und 390-2 im Bereich der Vorderachse und eine dritte zusätzliche Energiequelle 390-3 im Bereich der Hinterachse.

Die Fig. 3 und 4 zeigen hierbei das Wagenhebersystem einmal in der Betriebssituation, bei der die Wagenheberelemente 100 eingezogen sind (Fig. 3) und einmal in dem die Wagenheberelemente 100 ausgefahren, das Kraftfahrzeug 310 somit von einer Aufstandsfläche 400 des Kraftfahrzeugs 310 abgehoben ist. Zu diesem Zweck treten die Aufstandselemente 180 (nicht mit einem Bezugszeichen in Fig. 3 und 4 gekennzeichnet) gerade mit der Aufstandsfläche 400 in Kontakt, um das Fahrzeug von dieser abzuheben.

Die zusätzlichen Energiequellen 390 stellen hierbei optionale Komponenten dar, die beispielsweise bei einem Ausfall oder einem Schaden des elektrischen Kontakts 330 bzw. des elektrischen Gegenkontakts 350 dennoch den Wagenheberelementen 100 eine ausreichende Energie zur Verfügung stellen können, um wenigstens für eine beschränkte Anzahl das Kraftfahrzeug 310 von der Aufstandsfläche 400 anzuheben. Hierdurch kann gegebenenfalls ein Rennen auch bei wechselbedürftigen Rädern oder Reifen noch beendet werden. Allerdings handelt es sich bei diesen um optionale Komponenten, die gegebenenfalls auch entfallen können. So kann das Wagenhebersystem 300 beispielsweise auch durch das Bordnetz versorgt werden.

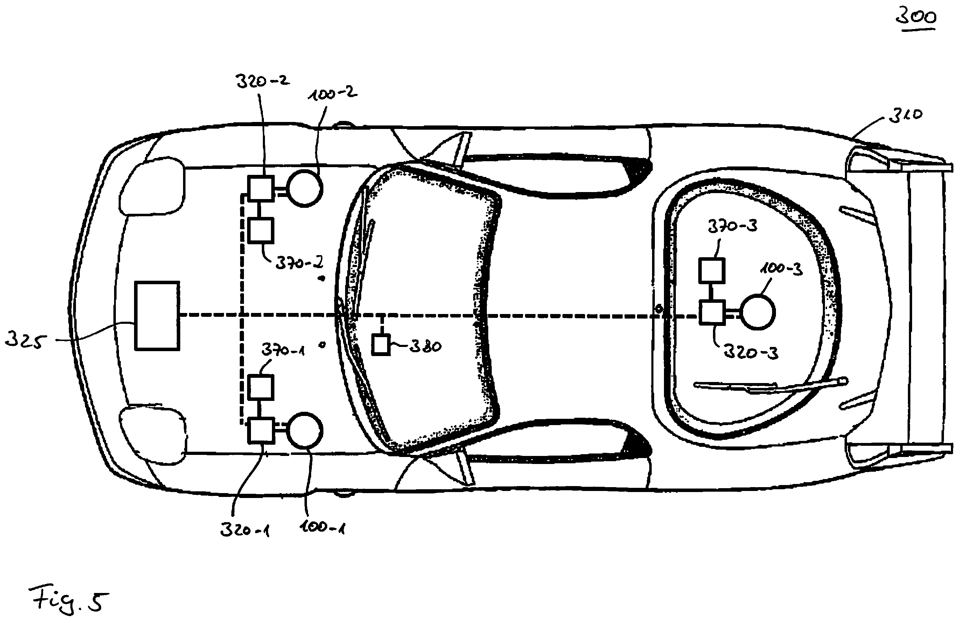

Im Unterschied hierzu zeigt Fig. 5 eine Fig. 2 vergleichbare Darstellung eines Wagenhebersystems 300, bei dem jedoch anstelle einer externen Stromversorgung durch die Energiequelle 370 des Wagenheberbedienelements 360 die Stromversorgung ausschließlich durch interne Energiequellen 370-1, 370-2 und 370-3 erfolgt, die im Vergleich zu dem in Fig. 3 und 4 gezeigten Ausführungsbeispiel die Positionen der zusätzlichen Energiequellen 390 einnehmen. Entsprechend weist das in Fig. 5 gezeigte Ausführungsbeispiel ebenso gerade keinen elektrischen Kontakt 330 bzw. einen entsprechenden Verbindungsstecker 340 auf. Das elektrische Schaltelement 380, mit dessen Hilfe das Steuersignal an die Steuergeräte 320 bereitgestellt werden kann, ist bei diesem Ausführungsbeispiel im Inneren des Kraftfahrzeugs 310 gerade so angeordnet, dass der Fahrer dieses beim Boxenstopp bedienen kann. Selbstverständlich kann ein entsprechendes elektrisches Schaltelement 380 ergänzend oder alternativ auch an einer Außenseite des Kraftfahrzeugs 310 angeordnet sein. Hierdurch kann es der Boxenbesatzung möglich sein, das Wagenhebersystem 300 ergänzend oder alternativ zu aktivieren.

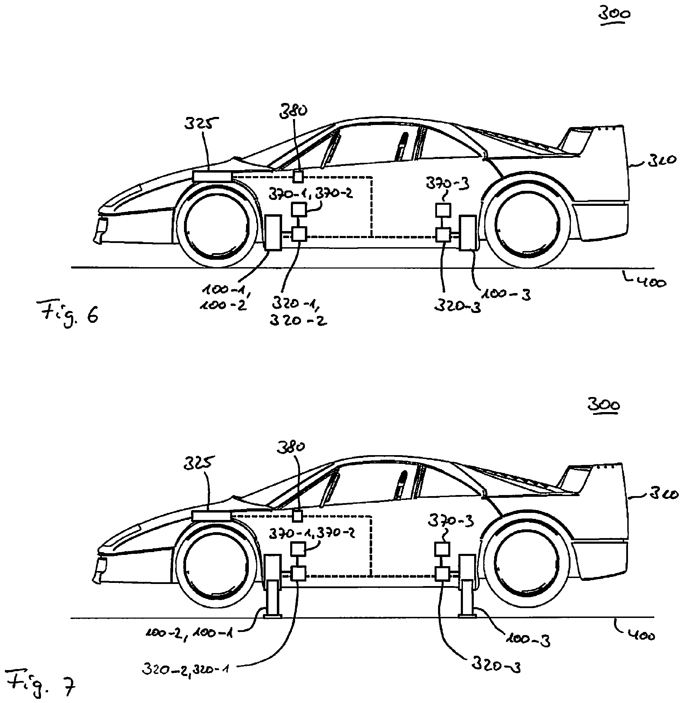

Entsprechend sind bei dem in Fig. 5 gezeigten Ausführungsbeispiel auch das elektrische Schaltelement 380, die Steuergeräte 320, die Motorelektronikeinheit 325 und die Wagenheberelemente 100 über entsprechende Steuer- bzw. Datenleitungen miteinander verbunden. Im Unterschied hierzu sind die Energiequellen 370 jeweils nur mit den ihnen zugeordneten Steuergeräten 320 und den Wagenheberelementen 100 verbunden. Hierdurch kann also gegebenenfalls ein Verkabelungsaufwand zur Verteilung der elektrischen Energie an die Wagenheberelemente 100 reduziert werden. Entsprechend zeigen die Fig. 6 und 7 das in Fig. 5 gezeigte Ausführungsbeispiel eines Wagenhebersystems 300 in einer Seitenansicht des Kraftfahrzeugs 310. Fig. 6 zeigt hierbei den Zustand des Wagenhebersystems 300, bei dem die Wagenheberelemente 100 eingezogen, sich das Kraftfahrzeug 310 somit auf der Aufstandsfläche 400 befindet. Im Unterschied hierzu zeigt Fig. 7 den Zustand des Wagenhebersystems 300, bei dem die Wagenheberelemente 100 ausgefahren sind, das Kraftfahrzeug 310 also aufgrund des in Kontakttretens der Aufstandselemente 180 mit der Aufstandsfläche 400 (teilweise nicht gezeigt in Fig. 7) das Kraftfahrzeug 310 von der Aufstandsfläche 400 anheben.

Selbstverständlich können bei anderen Ausführungsbeispielen auch die Zahl der entsprechenden Komponenten, also beispielsweise die Zahl der Wagenheberelemente 100, aber auch die Zahl der Steuergeräte 320 und der Energiequellen 370, 390 unabhängig voneinander variiert werden. Es können so beispielsweise mehr, jedoch gegebenenfalls auch weniger als drei der jeweils vorgenannten Komponenten implementiert werden. Ebenso können diese an anderen als den in Fig. 2 bis 7 gezeigten Positionen im Kraftfahrzeug 310 implementiert werden. So können beispielsweise vier Wagenheberelemente 100 derart angebracht sein, dass zwei von diesen im Bereich der Vorderachse und die restlichen zwei im Bereich der Hinterachse eingebaut sind. Ebenso können jedoch auch nur drei Wagenheberelemente 100 vorgesehen sein, von denen nur eines im Bereich der Vorderachse und zwei im Bereich der Hinterachse eingebaut sind. Selbstverständlich können beispielsweise bei größeren Rennfahrzeugen (z. B. im Lastkraftwagenrennsport) auch mehr als die vorgenannten drei oder vier Wagenheberelemente vorgesehen werden. Je nach konkreter Ausgestaltung kann es gegebenenfalls sogar möglich sein, ein Wagenhebersystem 300 mit nur zwei Wagenheberelementen vorzusehen, wenn beispielsweise aufgrund von Reglementbeschränkungen oder anderen technischen Gegebenheiten beispielsweise lediglich die r Räder der Hinterachse oder die Räder der Vorderachse während des Rennens getauscht werden dürfen oder müssen.

Durch den Einsatz eines Wagenheberelements 100, eines Wagenhebersystems 300 und/oder eines Wagenheberbedienelements 360 kann gegebenenfalls eine Verbesserung der Sicherheit im Zusammenhang mit Wagenheberelementen und Wagenhebersystemen erreicht werden.

### Bezugszeichenliste

- 100: Wagenheberelement
- 110: elektrische Antriebseinheit
- 120: Elektromotor
- 130: Getriebe
- 140: Kupplung
- 150: Umformelement
- 160: Gewindetrieb
- 170: Hubzylinder
- 180: Aufstandselement
- 190: Klauenkupplung
- 200: Kupplungsgehäuse
- 210: Verbindungsstruktur
- 220: Gewinde
- 300: Wagenhebersystem
- 310: Kraftfahrzeug
- 320: Steuergerät
- 325: Motorelektronikeinheit
- 330: elektrischer Kontakt
- 340: Verbindungsstecker
- 350: elektrischer Gegenkontakt
- 360: Wagenheberbedienelement
- 370: Energiequelle
- 380: elektrisches Schaltelement
- 390: zusätzliche Energiequelle
- 400: Aufstandsfläche

## Patentansprüche

1. Wagenhebersystem (300) für ein Kraftfahrzeug (310) mit einer Mehrzahl von Wagenheberelementen (100), wobei die Wagenheberelemente (100) an dem Kraftfahrzeug (310) derart fest eingebaut sind, dass das Kraftfahrzeug (310) auf eine Ansteuerung der Wagenheberelemente (100) wenigstens teilweise angehoben wird, wobei die Wagenheberelemente (100) derart ausgebildet sind, um elektrisch betrieben zu werden, **dadurch gekennzeichnet, dass** ein elektrischer Kontakt (330) an einem Äußeren des Kraftfahrzeugs (310) zugänglich angeordnet ist, der mit der Mehrzahl von Wagenheberelementen (100) derart gekoppelt ist, um darüber die Mehrzahl der Wagenheberelemente (100) anzusteuern und eine zum Betrieb der Mehrzahl der Wagenheberelemente (100) notwendige elektrische Energie teilweise oder vollständig bereitzustellen.

2. Wagenhebersystem (300) nach Anspruch 1, bei dem das Wagenheberelement (100) eine elektrische Antriebseinheit (110) und ein Umformelement (150) umfasst, wobei die Antriebseinheit (110) ausgebildet ist, um auf die Ansteuerung hin eine Drehbewegung zu erzeugen, und wobei das Umformelement (150) derart ausgebildet ist, um die Drehbewegung in eine lineare Bewegung umzusetzen, durch die das Kraftfahrzeug (310) wenigstens teilweise angehoben wird.

3. Wagenhebersystem (300) nach Anspruch 2, bei dem die elektrische Antriebseinheit (110) einen Elektromotor (120) umfasst.

4. Wagenhebersystem (300) nach Anspruch 3, bei dem der Elektromotor (120) ein Leistungsgewicht von wenigstens 5 W/g aufweist.

5. Wagenhebersystem (300) nach einem der Ansprüche 2 bis 4, bei dem das Umformelement (150) einen Gewindetrieb (160) umfasst.

6. Wagenhebersystem (300) nach Anspruch 5, bei dem der Gewindetrieb (160) ein linear bewegbares Bauteil aufweist, das mit einem Aufstandselement (180) mechanisch gekoppelt ist, wobei das Aufstandselement (180) ausgebildet ist, um mit einer Aufstandsfläche (400), auf der das Kraftfahrzeug (410) angeordnet ist, auf die Ansteuerung hin in Kontakt zu treten, um das Kraftfahrzeug (310) wenigstens teilweise anzuheben.

7. Wagenhebersystem (300) nach einem der vorangehend en Ansprüche, das ferner wenigstens ein Steuergerät (320) umfasst, das mit wenigstens einem Wagenheberelement (100) der Mehrzahl von Wagenheberelementen (100) derart gekoppelt und ausgebildet ist, um auf ein Steuersignal hin das wenigstens eine mit dem Steuergerät (320) gekoppelte Wagenheberelement (100) anzusteuern.

8. Wagenheberbedienelement (360) für ein Wagenhebersystem (300) gemäß einem der vorangehenden Ansprüche, mit folgenden Merkmalen:
eine Energiequelle (370), beispielsweise einen Lithium-Polymer-Akku, und ein elektrisches Schaltelement (380), beispielsweise einen elektrischen Schalter oder einen elektrischen Taster; und/oder ein Steuergerät, das ausgebildet ist um die Mehrzahl der Wagenheberelemente (100) des Wagenhebersystems (300) anzusteuern; und
ein elektrischer Gegenkontakt (350), der derart ausgebildet ist, um mit dem elektrischen Kontakt (330) des Wagenhebersystems (300) derart gekoppelt zu werden, um die Energiequelle (370) mit dem Wagenhebersystem (300) elektrisch zu verbinden, und um ein von dem elektrischen Schaltelement (380) bereitgestelltes Steuersignal dem Wagenhebersystem (300) bereitzustellen und/oder um die Mehrzahl der Wagenheberelemente (100) des Wagenhebersystems (300) anzusteuern.

## Claims

1. A lifting jack system (300) for a motor vehicle (310) having a plurality of lifting jack elements (100),
the lifting jack elements (100) being fixedly installed on the motor vehicle (310), such that the motor vehicle (310) is at least partially lifted when the lifting jack elements (100) are actuated,
the lifting jack elements (100) being implemented for being electrically powered, **characterized in that** an electrical contact is accessibly disposed on the exterior of the motor vehicle (310) and coupled to the plurality of lifting jack elements (100) for actuating the plurality of lifting jack elements (100) by means thereof, and for partially or completely providing the electrical energy required for operating the plurality of lifting jack elements (100).

2. The lifting jack system (300) according to claim 1,
wherein the lifting jack element (100) comprises an electrical drive unit (110) and a transforming element (150), wherein the drive unit (110) is implemented for generating a rotary motion when actuated, and wherein the transforming element (150) is implemented for transforming the rotary motion into a linear motion, by means of which the motor vehicle (310) is at least partially raised.

3. The lifting jack system (300) according to claim 2,
wherein the electrical drive unit (110) comprises an electric motor (120).

4. The lifting jack system (300) according to claim 3,
wherein the electric motor (120) comprises a power-to-weight ratio of at least 5 W/g.

5. The lifting jack system (300) according to any one of the claims 2 through 4, wherein the transforming element (150) comprises a screw drive (160).

6. The lifting jack system (300) according to claim 5,
wherein the screw drive (160) comprises a linearly displaceable component mechanically coupled to a contact element (180), wherein the contact element (180) is implemented for making contact, when actuated, with a contact area (400) on which the motor vehicle (410) is disposed, in order to at least partially raise the motor vehicle (310).

7. The lifting jack system (300) according to any one of the preceding claims, further comprising at least one control device (320) coupled to at least one lifting jack element (100) of the plurality of lifting jack elements (100) and implemented for actuating the at least one lifting jack element (100) coupled to the control device (320) in response to a control signal.

8. A lifting jack element (360) for a lifting jack system (300) according to any one of the preceding claims, having the following features:
a power source (370), for example a lithium-polymer rechargeable battery, and an electrical switching element (380), for example an electrical switch or an electrical pushbutton; and/or a control device implemented for actuating the plurality of lifting jack elements (100) of the lifting jack system (300); and
an electrical mating contact (350) implemented for being coupled to the electrical contact (330) of the lifting jack system (300) for electrically connecting the power source (370) to the lifting jack system (300), and for providing to the lifting jack system (300) a control signal provided by the electrical switching element (380) and/or for actuating the plurality of lifting jack elements (100) of the lifting jack system (300).

## Revendications

1. Système de cric (300) pour un véhicule à moteur (310), avec une multitude d'éléments de cric (100), dans lequel les éléments de cric (100) sont montés de manière fixe sur le véhicule à moteur (310) de sorte que le véhicule à moteur (310) soit au moins partiellement levé en réponse à une commande des éléments de cric (100), dans lequel les éléments de cric (100) sont conçus pour être actionnés électriquement, **caractérisé en ce qu'**un contact électrique (330) est disposé de manière accessible sur un côté extérieur du véhicule à moteur (310), lequel contact est couplé à la multitude d'éléments de cric (100) de manière à, via ces derniers, commander la multitude d'éléments de cric (100) et à fournir partiellement ou intégralement une énergie électrique nécessaire au fonctionnement de la multitude d'éléments de cric (100).

2. Système de cric (300) selon la revendication 1, dans lequel l'élément de cric (100) comprend une unité d'entraînement électrique (110) et un élément de conversion (150), dans lequel l'unité d'entraînement (110) est conçue pour générer un mouvement de rotation en réponse à la commande, et dans lequel l'élément de conversion (150) est conçu pour convertir le mouvement de rotation en un mouvement linéaire par lequel le véhicule à moteur (310) est au moins partiellement levé.

3. Système de cric (300) selon la revendication 2, dans lequel l'unité d'entraînement électrique (110) comprend un moteur électrique (120).

4. Système de cric (300) selon la revendication 3, dans lequel le moteur électrique (120) a un rapport puissance/masse d'au moins 5 W/g.

5. Système de cric (300) selon l'une quelconque des revendications 2 à 4, dans lequel l'élément de conversion (150) comprend un entraînement à éléments filetés (160).

6. Système de cric (300) selon la revendication 5, dans lequel l'entraînement à éléments filetés (160) comprend un élément mobile linéairement, qui est couplé mécaniquement à un élément de pied (180), l'élément de pied (180) étant conçu pour, en réponse à la commande, entrer en contact avec une surface d'appui (400) sur laquelle est disposé le véhicule à moteur (410) pour lever au moins partiellement le véhicule à moteur (310).

7. Système de cric (300) selon l'une quelconque des revendications précédentes, comprenant en outre au moins un appareil de commande (320) qui est couplé à au moins un élément de cric (100) de la multitude d'éléments de cric (100) et conçu pour, en réponse à un signal de commande, commander l'au moins un élément de cric (100) couplé à l'appareil de commande (320).

8. Élément de commande de cric (360) pour un système de cric (300) selon l'une quelconque des revendications précédentes, ayant les caractéristiques suivantes :
une source d'énergie (370), par exemple une batterie lithium-polymère, et un élément de commutation électrique (380), par exemple un interrupteur électrique ou un bouton-poussoir électrique ; et/ou un appareil de commande qui est conçu pour commander la multitude d'éléments de cric (100) du système de cric (300) ; et
un contre-contact électrique (350) qui est conçu pour être couplé au contact électrique (330) du système de cric (300) de manière à connecter électriquement la source d'énergie (370) au système de cric (300), et pour fournir au système de cric (300) un signal de commande fourni par l'élément de commutation électrique (380) et/ou pour commander la multitude des éléments de cric (100) du système de cric (300).
